# FASCICULE DE BREVET EUROPEEN

(11) **EP 1 455 290 B1**
(45) Date de publication et mention de la délivrance du brevet: **03.01.2007**
(21) Numéro de dépôt: 03102743.6
(22) Date de dépôt: 15.09.2003
(51) Int. Cl.: G06F 17/30, H04L 29/06

(54) **Procédé de gestion d'une configuration d'une passerelle par un utilisateur de la passerelle**
Verfahren zur Verwaltung einer Einstellung eines Gateways von einem Benutzer des Gateways
Method for the management of a configuration of a gateway by a user of the gateway

(30) Priorité: 24.09.2002 FR 0211805
(43) Date de publication de la demande: 08.09.2004
(73) Titulaire: Société Française du Radiotéléphone-SFR, 75008 Paris (FR)
(72) Inventeur: Wary, Jean-Philippe, 92340 Bourg la Reine (FR)
(74) Mandataire: Schmit, Christian Norbert Marie

(56) Documents cités:
- EP-A- 1 089 516
- WO-A-00/48110
- WO-A-00/52900
- WO-A-00/70500
- WO-A-01/52023
- US-B1- 6 412 073

## Description

L'invention a pour objet un procédé de gestion d'une configuration de comportement d'une passerelle d'un fournisseur d'accès en fonction des souhaits d'un utilisateur accédant à un fournisseur de contenu via la passerelle du fournisseur d'accès. Le domaine de l'invention est celui de la fourniture d'accès à des réseaux multimédia tels qu'Internet. En particulier le domaine de l'invention est celui des opérateurs de téléphonie mobile permettant à leurs abonnés d'accéder à des serveurs de fournisseurs de contenu. Un but de l'invention est de permettre à un utilisateur abonné à un fournisseur d'accès à un réseau multimédia de préserver sa vie privée. Un autre but de l'invention est de permettre à ce même utilisateur de paramétrer la gestion de sa vie privée. Un autre but de l'invention est de permettre à des fournisseurs de contenu de gérer des contextes en fonction d'une identité de l'utilisateur.

Dans l'état de la technique il existe plusieurs moyens pour un fournisseur de contenu d'identifier un utilisateur qui accède à l'un de ses services. Ces moyens dépendent du média utilisé par l'utilisateur pour accéder au service. On distingue principalement quatre modes d'accès, mais la liste n'est pas exhaustive. Un premier mode d'accès est un accès de type Internet. Le mode Internet se subdivise lui même en deux sous-modes que l'on peut qualifier de mode connecté et mode non connecté. Le mode Internet connecté est un mode de connexion utilisant un protocole de type HTTP (Hyper Text Transfer Protocol, ou protocole de transmission hypertexte) ou WTP (Wireless Transfer Protocol, ou protocole de transmission sans fil). Un serveur, par exemple HTTP, est un appareil communicant via un réseau, par exemple Internet, et selon le protocole HTTP. Un tel serveur héberge des sites WEB (ou Internet) ou WAP (ou Internet adapté au téléphone mobile). Il existe aussi un mode d'accès Internet non connecté via un protocole de type SMTP (Simple Mail Transfer Protocol, ou protocol simple de transfert de mail), dans lequel la connexion consiste en fait en un échange de message électronique de type mail.

Un autre mode d'accès est un mode d'accès par opérateur qui se subdivise lui aussi en deux sous-modes. Un premier sous-mode d'accès, et troisième mode d'accès, est alors un mode d'accès qu'on peut qualifier de non connecté via un protocole de type SMS (Short Message Service, ou service de message court), ou MMS (Multimedia Message Service, ou service de message multimédia). Un quatrième mode d'accès est un mode par opérateur connecté que l'on appelle aussi mode vocal dans lequel l'utilisateur accède à un serveur vocal.

Pour les quatre mode d'accès, il existe une solution type simple qui consiste à réaliser une interface proposant la saisie d'un identifiant et d'un mot de passe lors d'une connexion à un serveur. Dans la mesure où l'utilisateur se connectant au serveur du fournisseur de contenu le fait via un téléphone mobile, les moyens mis à la disposition de l'utilisateur, pour saisir l'identifiant (ou login) et le mot de passe, sont limités par l'interface utilisateur du téléphone. Soit l'identifiant et le mot de passe sont intégralement numériques, ils sont alors malaisés à retenir et facile à deviner. Soit l'identifiant et le mot de passe sont alphanumériques, et dans ce cas il est fastidieux de les saisir avec un clavier ne comportant que 9 touches. De plus cette étape de saisie constitue une étape supplémentaire pour l'utilisateur ce qui dissuade, dans la plupart des cas, un utilisateur de téléphone mobile de se connecter au site proposant une interface de connexion du type identifiant et mot de passe.

Une autre solution, dans le cas des serveurs du premier type, consiste à se servir d'un cookie, ou témoin. Un cookie est un petit fichier enregistré sur l'appareil de l'utilisateur. Lors d'une connexion à un fournisseur de contenu, le fournisseur de contenu peut alors accéder à ce cookie pour identifier l'utilisateur. Un problème de cette solution réside dans le fait qu'il est possible de voler un cookie par des moyens électroniques ou autre. L'utilisation d'un cookie n'est donc pas compatible avec des impératifs forts de sécurité. Un autre problème réside alors dans le fait que les cookies ont une relativement mauvaise presse, ce qui incite les utilisateurs à les effacer. De plus l'utilisateur peut configurer l'application, ou navigateur, qu'il utilise pour se connecter au fournisseur de contenu, afin que cette application n'accepte pas les cookies. Dans ce cas l'utilisateur se voit dans l'impossibilité de se connecter au serveur du fournisseur de contenu.

Pour les deuxièmes et troisièmes types de serveurs, la plupart du temps le fournisseur de contenu a accès au numéro de téléphone de la personne qui appelle le serveur. Le fournisseur de contenu est donc capable d'identifier la personne via ce numéro de téléphone. Cela ne va pas sans poser un problème de protection de la vie privée. En effet il est tout à fait concevable qu'un utilisateur ne souhaite pas être identifié physiquement lorsqu'il se connecte à un serveur d'un fournisseur de contenu. II est alors possible d'essayer de se connecter en masquant son numéro, mais dans ce cas il est impossible de facturer le service et donc de se connecter. A l'heure actuelle, la seule solution consiste donc à ne pas se connecter à ce fournisseur de contenu.

Dans l'état de la technique on connait aussi le document WO/00/48110A.

On constate donc que dans l'état de la technique, soit l'utilisateur se connectant à un serveur d'un fournisseur de contenu est parfaitement identifié via son numéro de téléphone, soit l'utilisateur doit se souvenir d'un identifiant et d'un mot de passe pour chaque fournisseur de contenu. Dans le premier cas on peut considérer qu'il s'agit d'une grave atteinte à la vie privée de l'utilisateur, dans le deuxième cas, la gestion de tous ces identifiants décourage bien souvent l'utilisateur. La plupart du temps cela a comme conséquence qu'un utilisateur se connectant plusieurs fois à un même site préférera recréer un nouvel identifiant, et un nouveau mot de passe, car il aura oublié ceux qu'il a utilisés lors de sa précédente connexion.

Dans l'invention on résout ces problèmes en centralisant la gestion de la vie privée d'un utilisateur abonné à un fournisseur d'accès sur une passerelle. Cette passerelle utilise un fichier de configuration pour définir le comportement que l'abonné souhaite voir adopter par la passerelle. Ce fichier de configuration est accessible et modifiable à souhait par l'utilisateur. Un tel fichier de configuration permet de définir, pour chaque fournisseur de contenu, quel type d'identifiant l'utilisateur souhaite présenter au fournisseur de contenu, et quels services l'utilisateur accepte que l'opérateur mette à disposition du fournisseur de contenu.

Les types d'identifiants que peut produire/présenter la passerelle 103 sont des identifiants isolants et sont parmi un identifiant temporaire, ou un identifiant de session, qui a une durée de vie limitée à quelques minutes, un identifiant de contexte qui a une durée de vie bien plus longue, de l'ordre de six mois à plusieurs années, et un identifiant personnalisé que l'utilisateur définit lui-même. Un identifiant isolant isole l'état civil de l'utilisateur, connu du fournisseur d'accès, du fournisseur de contenu qui ne connaît que l'identifiant isolant.

Les services que peut mettre à disposition la passerelle à des fournisseurs de contenu sont des services de localisation, des services d'informations sur l'appareil utilisé par un utilisateur pour se connecter au fournisseur de contenu, des services de porte-monnaie, de compte bancaire, de carte de visite, de renseignement d'adresse de livraison, et ainsi de suite.

L'invention a donc pour objet un procédé de gestion d'une configuration de comportement d'une passerelle d'un fournisseur d'accès en fonction des souhaits d'un utilisateur accédant à un fournisseur de contenu via la passerelle du fournisseur d'accès selon la revendication 1.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une illustration de moyens utiles à la mise en oeuvre du procédé selon l'invention ;
- Figure 2 : une illustration d'un scénario mettant en oeuvre le procédé selon l'invention.

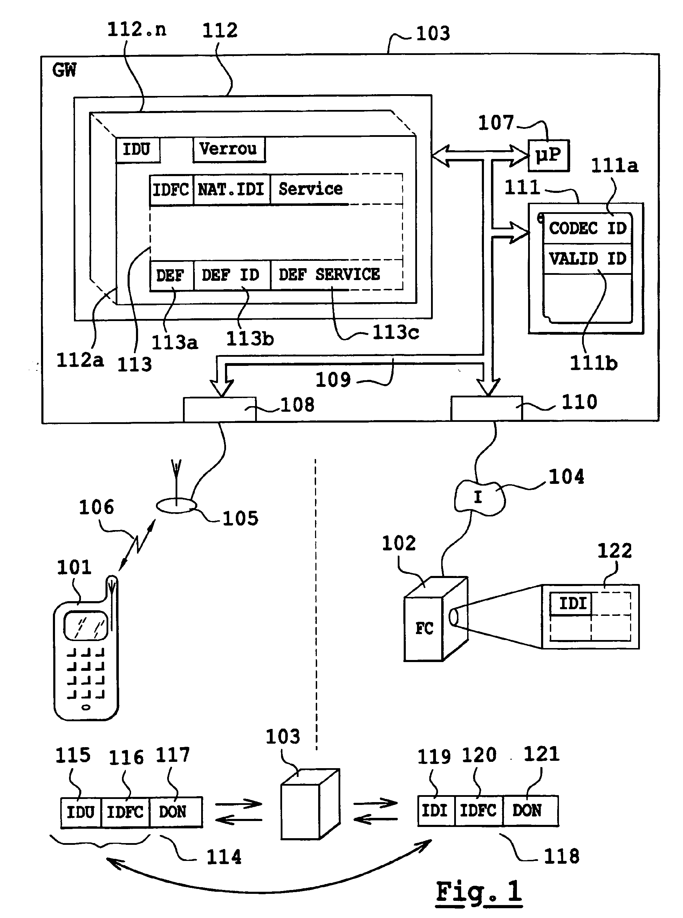

La figure 1 montre un appareil 101 permettant à un utilisateur de se connecter à un serveur 102 d'un fournisseur de contenu via une passerelle 103 d'un fournisseur d'accès à un réseau 104 multimédia.

Pour la description on considère que l'appareil 101 est un téléphone 101 mobile. Celui-ci se connecte donc à une station 105 de base, via une liaison 106 hertzienne, d'un réseau cellulaire de téléphonie mobile. La station de base 105 est connectée à la passerelle 103 du fournisseur d'accès. Dans l'exemple le fournisseur d'accès est aussi opérateur de téléphonie mobile, c'est cet opérateur qui gère la station 105 de base.

Dans la description on considère que le réseau 104 est le réseau Internet. Dans la pratique il pourrait s'agir de n'importe quel réseau permettant de connecter le serveur 102 du fournisseur de contenu à la passerelle 103. Un tel réseau pourrait très bien être, par exemple, un réseau de téléphonie commuté.

Sur le réseau de téléphonie cellulaire, l'utilisateur du téléphone 101 mobile est identifié par un identifiant utilisateur qui est son numéro de téléphone. Ce numéro de téléphone permet donc à n'importe qui d'associer à cet identifiant utilisateur une personne physique. En effet c'est par cet identifiant utilisateur que l'utilisateur est joint sur son téléphone.

La figure 1 montre que la passerelle 103 comporte un microprocesseur 107. La passerelle 103 comporte aussi des circuits 108 interface avec la station de base 105. Les circuits 108 sont connectés au microprocesseur via un bus 109.

La passerelle 103 comporte aussi des circuits 110 interface avec le réseau 104 Internet. Les circuits 110 sont connectés au bus 109. Le rôle des circuits interface est d'assurer une compatibilité des signaux entre l'extérieur de la passerelle 103 et les signaux circulant sur le bus 109.

La passerelle 103 comporte aussi une mémoire 111 de programme. La mémoire 111 comporte des codes instructions permettant à la passerelle 103, c'est-à-dire au microprocesseur 107, d'effectuer des actions. La mémoire 111 comporte une zone 111a comportant des codes instructions pour le codage et le décodage des identifiants. La mémoire 111 comporte aussi une zone 111b pour la validation des identifiants. Brièvement ici, la zone 111a permet d'assurer la protection de la vie privée d'un utilisateur en transformant l'identifiant utilisateur en identifiant utilisateur isolant. La zone 111b permet à la passerelle 103 de prendre en compte les desiderata de l'utilisateur quant à la gestion de sa vie privée.

La passerelle 103 comporte aussi une mémoire 112 utilisateur. La mémoire 112, comme la mémoire 111, est connectée au bus 109. La mémoire 112 est en fait une base de données utilisateur regroupant au moins les informations de gestion de vie privée des utilisateurs. La mémoire 112 est découpée, pour les besoins de la description, en enregistrements. Un enregistrement peut être un fichier, ou un morceau de fichier dans une mémoire numérique. Il y a donc, de préférence, dans la mémoire 112 autant d'enregistrements que d'utilisateurs susceptibles d'utiliser la passerelle 103 pour se connecter à un fournisseur de contenu. Chaque enregistrement correspond alors à un utilisateur/abonné. Cependant, il se peut qu'un utilisateur/abonné ne soit pas associé à un enregistrement. Dans ce cas il existe un enregistrement par défaut qui est associé à tous les utilisateurs/abonnés n'ayant pas d'enregistrement propre dans la mémoire 112. On ne décrira la structure que d'un seul enregistrement 112a, sachant que tous les enregistrements ont la même structure.

Un enregistrement 112a comporte un premier champ IDU permettant d'enregistrer l'identifiant utilisateur. Le champ IDU comporte donc, de préférence, un numéro de téléphone d'un utilisateur abonné à l'opérateur gérant la passerelle 103.

C'est le champ IDU qui permet d'accéder au bon enregistrement. Un enregistrement 112a comporte une table 113. La table 113 est structurée en lignes et en colonnes. Chaque ligne correspond à un fournisseur de contenu, et chaque colonne correspond à une information sur le fournisseur de contenu. La table 113 comporte une colonne 113a permettant d'enregistrer un identifiant de fournisseur de contenu. Un tel identifiant de fournisseur de contenu est, par exemple, une adresse Internet, ou une URL (Universal Resource Locator pour localisation universelle de ressources), un numéro de téléphone, une adresse IP, une adresse électronique en général.

La table 113 comporte une deuxième colonne 113b correspondant à la nature de l'identifiant isolant que l'utilisateur associe au fournisseur de contenu. Une colonne 113c permet à l'utilisateur d'associer une liste de services au fournisseur de contenu. Les services contenus dans cette liste sont ceux que la passerelle est autorisée à rendre au fournisseur de contenu lorsqu'une requête de service concerne l'utilisateur identifié par le champ IDU.

La passerelle 103 a donc un rôle d'intermédiaire entre l'appareil 101 et le serveur 102. En règle générale, la passerelle 103 reçoit et/ou émet des trames 114 de, et/ou vers, l'appareil 101. Une trame 114 comporte, en plus des données utiles à la communication fournisseur d'accès / utilisateur, un champ 115 identifiant l'utilisateur, un champ 116 identifiant le fournisseur de contenu et un champ 117 de données transportées. La passerelle 103, d'autre part, reçoit, et/ou émet, des trames 118 de, et/ou vers, le serveur 102. La trame 118 comporte, en plus des données utiles à la communication fournisseur d'accès / fournisseur de contenu, un champ identifiant 119 utilisateur isolant, un champ identifiant 120 le fournisseur de contenu et un champ 121 de données transportées. La passerelle 103, via les codes instructions de la zone 111 a, permet d'établir un lien entre d'une part les champs 115-116, et d'autre part le champ 119. Dans la pratique les champs 116, respectivement 117 sont identiques aux champs 120 respectivement 121.

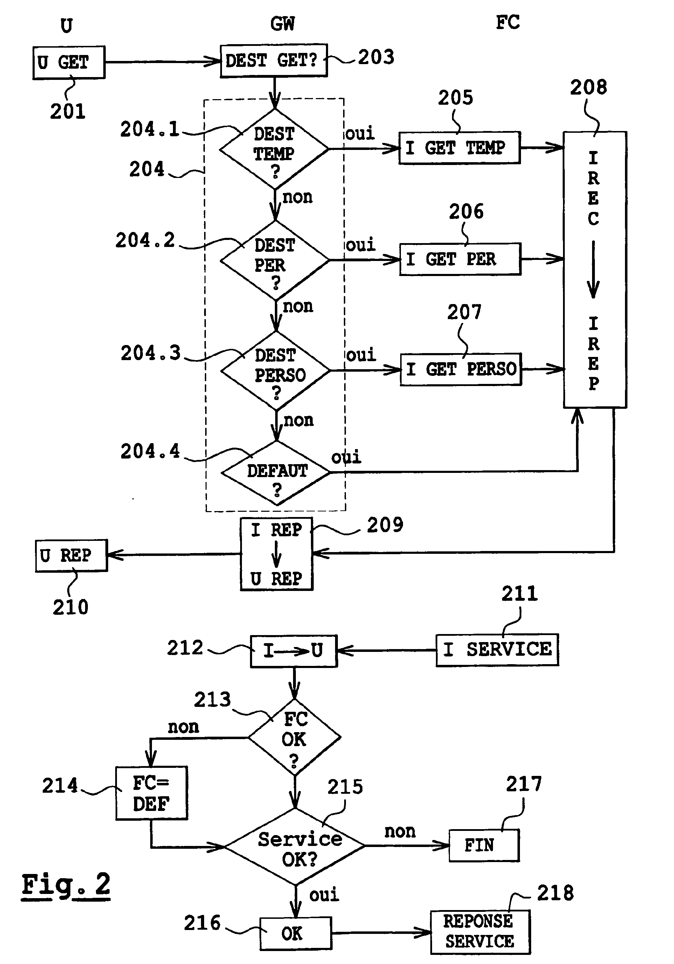

La figure 2 montre une étape 201 préliminaire dans laquelle l'utilisateur de l'appareil 101 utilise cet appareil pour émettre une requête à destination d'un fournisseur de contenu. Pour l'exemple on admet que la requêt émise à l'étape 201 est une requête de type GET, ou prendre, selon un protocole de type HTTP, c'est-à-dire hyertext tranfer protocol, ou protocole de tranfert hypertexte. La requête de l'étape 201, ou requête UGET est donc émise par l'appareil 101 et reçue, dans l'étape 203, par la passerelle 103. La requête UGET est du type de la requête de la trame 114.

Dans l'étape 203 la passerelle 103 a accès à l'identifiant 115 utilisateur de la requête UGET. Cet identifiant 115 utilisateur permet au microprocesseur 107 de retrouver un enregistrement dans la mémoire 112. D'autre part, grâce à la requête UGET, le microprocesseur 107 a accès à l'identifiant 116 de fournisseur de contenu. Cela permet d'identifier une ligne dans la table 113. Cette ligne identifiée renseigne alors sur la nature de l'identifiant isolant que la passerelle 103 doit produire. On passe à une étape 204 de détermination de la nature de l'identifiant isolant à produire. Dans l'étape 204 de l'exemple il y a quatre possibilités. Une première possibilité 204.1 correspond à une nature d'identifiant isolant temporaire ou de session. Une étape 204.2 correspond à une nature d'identifiant permanent ou de contexte. Une étape 204.3 correspond à une nature d'identifiant isolant personnalisé. Et enfin une étape 204.4 correspond à une nature d'identifiant par défaut. L'étape 204.x qui est mise en oeuvre est déterminée par la présence ou non de l'identifiant 116 dans la table 113. Si l'identifiant 116 n'est pas dans la table 113 alors on utilise une ligne spécifique de la table 113 qui correspond au comportement par défaut. Si l'identifiant 116 du fournisseur de contenu est présent dans la table 113 alors le champ 113b renseigne sur la nature de l'identifiant, et donc sur l'étape 204.1 - 204.3 mise en oeuvre.

De l'étape 204.1 on passe à une étape 205 de production d'une trame IGET avec un identifiant temporaire, de l'étape 204.2 on passe à une étape 206 de production d'une trame IGET avec un identifiant permanent, de l'étape 204.3 on passe à une étape 207 de production d'une trame IGET avec un identifiant personnalisé. De l'étape 204.4 on produit une trame IGET avec un identifiant correspondant à la nature d'identifiant par défaut spécifié par la table 113.

Dans les étapes 205 à 207 la passerelle 103 produit une trame IGET correspondant à la trame 118. Ce qui différencie les étapes 205 à 207 c'est la nature de l'identifiant utilisateur isolant produit pour renseigner le champ 119.

Un identifiant temporaire est, par exemple, une date associée à un identifiant utilisateur. Une telle date est par exemple, l'horloge UNIX, aussi connu sous le nom de timestamp UNIX. Il s'agit du nombre de secondes écoulées depuis le 1^{er} janvier 1970 à 0h00. Une telle date, associée à l'identifiant 115 utilisateur puis chiffrée, permet de renseigner un champ identifiant d'un identifiant utilisateur isolant.

Dans l'étape 206 le champ identifiant utilisateur isolant produit correspond, par exemple, au champ 115 chiffré selon un algorithme connu de la passerelle 103 seule. Dans une variante le champ 115 est associé, avant chiffrement, à un code fournisseur de contenu correspondant à l'identifiant 116 de fournisseur de contenu. Ainsi on obtient un champ identifiant pour l'identifiant utilisateur isolant qui est fonction à la fois de l'utilisateur et du fournisseur de contenu qu'il cherche à joindre.

Dans l'étape 207 le champ identifiant de l'identifiant utilisateur isolant correspond alors à une valeur spécifiée par l'utilisateur.

Dans l'étape 206 un code de fournisseur de contenu est associé à un identifiant de fournisseur de contenu via, par exemple, une table non représentée à la figure 1.

Une fois le champ identifiant de l'identifiant utilisateur isolant produit, l'identifiant utilisateur isolant est complété, de préférence, par un champ indiquant la nature de l'identifiant isolant, et par un champ indiquant l'opérateur ayant produit l'identifiant. Les deux derniers champs sont optionnels mais permettent au fournisseur de contenu, via le serveur 102, de mieux gérer les identifiants utilisateur isolant.

Des étapes 205 à 207 on passe à une étape 208 de réception de la trame IGET par le serveur 102. Dans l'étape 208, le serveur 102, a accès au champ 119. Cela lui permet de consulter une table 122. Cette table 122 est une table utilisateur. Elle est divisée en lignes et en colonnes. Chaque ligne correspond à un utilisateur identifié par un identifiant utilisateur isolant, chaque colonne correspond à une information sur l'utilisateur.

Dans l'exemple on voit que le seul moyen, pour le fournisseur de contenu, d'associer des informations à un utilisateur est de le faire via un identifiant utilisateur isolant. Or la seule entité capable d'associer l'identifiant utilisateur isolant à un utilisateur physique est le fournisseur d'accès, via la passerelle 103. La vie privée de l'utilisateur est donc bien protégée par le fournisseur d'accès. Le fournisseur de contenu doit se contenter d'un identifiant isolant se rapportant à un unique utilisateur pour la durée de vie de l'identifiant isolant, cet identifiant isolant n'identifiant alors que formellement, et pas civilement, une personne. Le fournisseur de contenu ne sait donc pas qui se connecte à son serveur. L'utilisateur a ainsi l'assurance que le fournisseur de contenu ne connaîtra que les informations que l'utilisateur aura lui-même et explicitement renseignés auprès du fournisseur de contenu lors d'une connexion réalisée en utilisant un identifiant isolant. Les informations collectées sont alors uniquement associées à l'identifiant isolant.

Dans l'étape 208 le serveur 102 peut enregistrer des informations dans la table 122 et/ou produire une réponse IREP à destination de l'utilisateur. La réponse IREP est alors la réponse à la requête IGET reçue, la requête IGET étant elle-même une transposition de la requête UGET.

De l'étape 208 on passe à une étape 209 de réception/traduction, par la passerelle 103, de la trame IREP en trame UREP. Cette étape 209 de traduction correspond à la transformation de l'identifiant utilisateur isolant en identifiant utilisateur. Puis la trame est alors transmise à l'appareil 101. Dans l'étape 210 l'appareil 101 reçoit la trame UREP, réponse à la trame UGET.

Dans la mesure où un identifiant utilisateur isolant a été produit par la passerelle 103, ou comporte un champ de nature, la passerelle 103 est en mesure d'inverser le processus ayant produit l'identifiant utilisateur isolant. Seule l'entité ayant produit l'identifiant utilisateur isolant peut réaliser l'inversion. Cette inversion permet l'accès à un identifiant utilisateur, donc à un enregistrement dans la mémoire 112. Dans le cas d'un identifiant utilisateur isolant temporaire, cette inversion donne accès à une date, donc permet de déterminer la date de création de l'identifiant utilisateur isolant temporaire, et donc sa validité en fonction d'une durée de vie maximale pour un tel identifiant.

A partir d'un identifiant utilisateur isolant, dans une étape 211, le fournisseur de contenu, via le serveur 102, peut émettre une requête ISERVICE de service. Cette requête de service est alors du type de la requête 118. La requête ISERVICE est reçue, par la passerelle 103, à l'étape 212.

A partir de la requête ISERVICE, la passerelle 103 est en mesure de récupérer un identifiant utilisateur isolant. A partir de l'identifiant utilisateur isolant, la passerelle 103, grâce aux codes instructions de la zone 111a, peut produire un identifiant utilisateur, et donc déterminer un enregistrement dans la table 112.

Le champ 120 de la trame ISERVICE permet à la passerelle 103 de déterminer une ligne dans la table 113 correspondant à l'utilisateur identifié par le champ 119, c'est l'étape 213 de détermination du fournisseur de contenu. Si l'identifiant de fournisseur de contenu est présent dans la table 113, le microprocesseur 107 peut alors déterminer une liste de services autorisés pour le fournisseur de contenu grâce à la colonne 113.c, et on passe à une étape 215 de validation du service requis. Si l'identifiant de fournisseur de contenu n'est pas dans la table 113 on passe à une étape 214 de récupération de la liste des services autorisés par défaut, qui tiendra lieu de liste des services autorisés pour la requête ISERVICE. De l'étape 214 on passe à l'étape 215. Dans le cas ou la liste des services par défaut comporte tous les services possibles, on prévoit des verrous supplémentaires correspondant à une politique propre au fournisseur d'accès. Ainsi, si tous les services, ou certains services prédéfinis, sont activés par défaut on peut imposer une condition sur la nature de l'identifiant isolant, ou l'identifiant de fournisseur de contenu, pour pouvoir accéder, par exemple, au service de localisation. Une localisation n'est alors fournie que si l'identifiant isolant est, par exemple, un identifiant temporaire. Ces verrous supplémentaires peuvent être supprimés utilisateur par utilisateur et par une action explicite de l'utilisateur concerné. Un verrou est donc un test effectué sur la nature de l'identifiant isolant, ou sur la valeur de l'identifiant du fournisseur de contenu, lors de l'étape 214. Ce test peut être désactivé volontairement par l'utilisateur. Ce verrou est matérialisé par un champ VERROU d'une table 112.x. Le fait de requérir une intervention de l'utilisateur pour la mise à jour de ce champ VERROU fait que l'utilisateur ne peut pas prétendre ne pas avoir été informé du comportement adopté par la passerelle puisqu'il a lui-même paramétré ce comportement. Dans une variante le champ VERROU se décline en autant de champs qu'il y a de services pouvant être mis à disposition par la passerelle.

Pour désigner tous les services soit on définit une liste dont on est capable de compter les éléments et on connaît le nombre total de services, on est donc capable de déterminer si une liste comporte tous les services. Soit on utilise un code prédéfini valant désignation de tous les services.

La requête ISERVICE, dans son champ 121, comporte un identifiant de service. La passerelle 103 détermine alors si cet identifiant de service est dans la liste des services autorisés. C'est l'étape 215. Si le service n'est pas autorisé, on passe à une étape 217 de fin et il ne sera fait aucune réponse, si ce n'est une réponse négative, à la requête ISERVICE émise à l'étape 211. Si le service est autorisé, on passe à une étape 216 dans laquelle la passerelle 103 produit une réponse, ou entreprend des actions correspondant, aux services sollicités par le serveur 102.

Dans une étape 218 le serveur 102 reçoit la réponse à la requête émise à l'étape 211.

Dans la pratique les algorithmes de chiffrement utilisés sont des algorithmes symétriques à clefs secrètes. On connaît, dans cette famille, les algorithme DES (Data Encryption Standard, pour chiffrement de données standard), 3DES, AES (Advanced Encryption Standard, pour standard de chiffrement avancé). II en existe d'autres, tout aussi valable.

Un utilisateur, abonné à l'opérateur gérant la passerelle 103, peut se connecter à ladite passerelle pour mettre à jour le contenu de l'enregistrement de la mémoire 112 lui correspondant. L'opérateur décide de la politique d'accès aux enregistrements. L'accès peut être libre ou soumis à l'acquittement d'un droit. De même l'accès peut se faire par l'intermédiaire d'une interface permettant à l'utilisateur de se connecter directement à la passerelle 103, ou par une requête papier ou orale à une personne charger de la maintenance de la mémoire 112.

Une telle mise à jour se déroule, par exemple, comme suit : un utilisateur émet vers la passerelle 103 une requête de téléchargement de l'enregistrement lui correspondant. Si l'utilisateur est autorisé à émettre une telle requête, alors la réponse à la requête comporte un fichier correspondant à l'enregistrement demandé. L'utilisateur édite alors l'enregistrement demandé sur l'appareil 101. Une fois l'édition finie, l'enregistrement édité est renvoyé vers la passerelle 103 pour mise à jour de la mémoire 112. Cette mise à jour est elle aussi soumise à un droit. Ces droits sont gérés par la passerelle 103 en fonction d'un identifiant utilisateur.

Dans une variante de l'invention les enregistrements de la mémoire 112 sont répartis sur les appareils des abonnés à l'opérateur gérant la passerelle 103. Lorsque le microprocesseur 107 souhaite consulter un enregistrement, il doit en faire la requête à l'appareil sur lequel est enregistré ledit enregistrement, c'est-à-dire l'appareil de l'utilisateur.

Dans une variante, la base 112 de données utilisateur n'est pas enregistrée sur la passerelle 103, mais dans une mémoire d'un autre serveur, non représenté, qui peut alors être interrogé par la passerelle 103.

## Revendications

1. - Procédé de gestion d'une configuration de comportement d'une passerelle d'un fournisseur d'accès en fonction des souhaits d'un utilisateur accédant à un fournisseur de contenu via la passerelle du fournisseur d'accès **caractérisé en ce qu'**il comporte les étapes suivantes:
- la passerelle réceptionne (203) une requête de l'utilisateur,
- la passerelle accède (204.1-204.3) à un enregistrement utilisateur comportant la description du comportement que l'utilisateur souhaite voir adopter par la passerelle, en fonction d'un identifiant du fournisseur de contenu,
- la passerelle accède (204.1-204.3) à l'enregistrement utilisateur, via un premier identifiant utilisateur automatiquement identifié sur le réseau et fourni par le fournisseur d'accès, lors de l'émission par l'utilisateur d'une requête vers le fournisseur de contenu,
- en cas d'insuccès la passerelle accède (204.3) à une mémoire utilisateur découpée en enregistrements comportant un enregistrement par défaut asocié à tous les utilisateurs n'ayant pas d'enregistrement utilisateur, la passerelle accédant alors automatiquement à cet enregistrement par défaut sans intervention de l'utilisateur,
- la passerelle accède (209, 212) à l'enregistrement utilisateur, via un deuxième identifiant utilisateur isolant, lors de la réception d'une requête, concernant l'utilisateur, de service de la part d'un fournisseur de contenu, pour lier les premier et deuxième identifiants.

2. - Procédé selon la revendication 1, **caractérisé en ce que** un enregistrement utilisateur associe le premier identifiant utilisateur à au moins un identifiant de fournisseur de contenu, un identifiant de fournisseur de contenu étant associé à une nature pour le deuxième identifiant isolant à fournir au fournisseur de contenu lors du relais, par le fournisseur d'accès, d'une requête de l'utilisateur vers le fournisseur de contenu.

3. - Procédé selon la revendication 2, **caractérisé en ce que** la nature du deuxième identifiant isolant est choisie parmi au moins le groupe formé d'identifiants temporaire, permanent ou personnalisé.

4. - Procédé selon l'une des revendications 1 à 3, **caractérisé en ce qu**'un enregistrement utilisateur associe le premier identifiant utilisateur à au moins un identifiant de fournisseur de contenu, un identifiant de fournisseur de contenu étant associé à au moins un service que le fournisseur d'accès est alors autorisé à mettre à disposition fournisseur de contenu.

5. - Procédé selon l'une des revendications 1 à 4, **caractérisé en ce que** un enregistrement utilisateur comporte une description d'un comportement par défaut pour la passerelle dans une ligne spécifique d'une table dans la mémoire utilisateur, le comportement par défaut étant adopté par la passerelle lorsqu'il n'est pas possible d'associer l'utilisateur à un fournisseur de contenu.

6. - Procédé selon l'une des revendications 1 à 5, **caractérisé en ce que** l'enregistrement utilisateur est enregistré dans une base de données utilisateurs interrogée par la passerelle.

7. - Procédé selon la revendication 6, **caractérisé en ce que** l'utilisateur se connecte à la base de données utilisateurs pour mettre à jour l'enregistrement le concernant.

8. - Procédé selon l'une des revendications 1 à 7, **caractérisé en ce que** l'enregistrement utilisateur est enregistré dans un terminal de l'utilisateur, la passerelle interrogeant ce terminal pour obtenir l'enregistrement utilisateur.

9. - Procédé selon l'une des revendications 1 à 8, **caractérisé en ce qu**'un comportement par défaut de la passerelle est verrouillé par un verrou devant être ouvert explicitement par l'utilisateur.

## Claims

1. A method for managing a configuration of behavior of a gateway of a service provider according to the wishes of a user accessing a content provider via the gateway of the service provider **characterized in that** the method comprises the following steps:
- the gateway receives (203) a request from the user,
- the gateway accesses (204.1-204.3) a user recording comprising the description of the behavior that the user wishes the gateway to adopt, according to an identifier of the content provider,
- the gateway accesses (204.1-204.3) the user recording via a first user identifier automatically identified on the network and provided by the service provider, during transmission by the user of a request to the content provider,
- if this is unsuccessful, the gateway accesses (204.3) a user memory partitioned into recordings comprising a default recording associated with all users not having a user recording, the gateway then automatically accesses this default recording without intervention from the user,
- the gateway accesses (209, 212) the user recording via a second isolating user identifier during reception of a .request concerning the user for service from the part of the content provider, to link the first and second identifiers.

2. The method according to claim 1, **characterized in that** a user recording associates the first user identifier with at least one content provider identifier, a content provider identifier being associated with a nature for the second isolating identifier to be provided to the content provider when the service provider relays a request from the user to the content provider.

3. The method according to claim 2, **characterized in that** the nature of the second isolating identifier is chosen from among at least the group formed of temporary, permanent or personalized identifiers.

4. The method according to one of claims 1 to 3, **characterized in that** a user recording associates the first user identifier with at least one content provider identifier, a content provider identifier being associated with at least one service that the service provider is then authorized to place at the disposal of the content provider.

5. The method according to one of claims 1 to 4, **characterized in that** a user recording comprises a description of a default behavior for the gateway in a specific line of a table in the user memory, the default behavior being adopted by the gateway when it is not possible to associate the user with a content provider.

6. The method according to one of claims 1 to 5, **characterized in that** the user recording is recorded in a user database interrogated by the gateway.

7. The method according to claim 6, **characterized in that** the user is connected to the user database to update the recording concerning the user.

8. The method according to one of claims 1 to 7, **characterized in that** the user recording is recorded in a user terminal, the gateway interrogating this terminal to obtain the user recording.

9. The method according to one of claims 1 to 8, **characterized in that** a default behavior of the gateway is locked by a lock that must be opened explicitly by the user.

## Patentansprüche

1. Verfahren zur Verwaltung einer Verhaltenskonfiguration einer Brücke eines Zugriffsanbieters in Abhängigkeit von den Wünschen eines Benutzers, der auf einen Inhaltsanbieter über eine Brücke des Zugriffsanbieters zugreift, **dadurch gekennzeichnet, dass** es die folgenden Schritte umfasst:
- die Brücke empfängt (203) eine Anfrage des Benutzers,
- die Brücke greift (204.1-204.3) auf eine Benutzerregistrierung zu, umfassend die Beschreibung des Verhaltens, das der Benutzer von der Brücke erwartet, in Abhängigkeit von einem Identifikator des Inhaltsanbieters,
- die Brücke greift (204.1-204.3) auf die Benutzerregistrierung über einen ersten Benutzeridentifikator zu, der automatisch im Netz identifiziert und vom Zugriffsanbieter geliefert wird, wenn der Benutzer eine Anfrage an den Inhaltsanbieter richtet,
- im Falle eines Misserfolgs greift die Brücke (204.3) auf einen Benutzerspeicher zu, der in Registrierungen unterteilt ist und eine Fehlregistrierung in Verbindung mit allen Benutzern, die keine Benutzerregistrierung besitzen, umfasst, wobei die Brücke nun automatisch auf diese Fehlregistrierung ohne Intervention des Benutzers zugreift,
- die Brücke greift (209, 212) auf die Benutzerregistrierung über einen zweiten isolierenden Benutzeridentifikator beim Erhalt einer Dienstanfrage hinsichtlich des Benutzers seitens eines Inhaltsanbieters zu, um den ersten und den zweiten Identifikator zu verbinden.

2. Verfahren nach Anspruch 1, **dadurch gekennzeichnet, dass** eine Benutzerregistrierung den ersten Benutzeridentifikator mit mindestens einem Identifikator eines Inhaltsanbieters verbindet, wobei ein Identifikator eines Inhaltsanbieters mit einer Natur für den zweiten isolierenden Identifikator, der an den Inhaltsanbieter zu liefern ist, verbunden ist, wenn es zu einer Relaisschaltung einer Anfrage des Benutzers an den Inhaltsanbieter durch den Zugriffsanbieter kommt.

3. Verfahren nach Anspruch 2, **dadurch gekennzeichnet, dass** die Natur des zweiten isolierenden Identifikators in mindestens der Gruppe ausgewählt wird, die von temporären, permanenten oder personalisierten Identifikatoren gebildet ist.

4. Verfahren nach einem der Ansprüche 1 bis 3, **dadurch gekennzeichnet**, das eine Benutzerregistrierung den ersten Benutzeridentifikator mit mindestens einem Identifikator eines Inhaltsanbieters verbindet, wobei ein Identifikator eines Inhaltsanbieters mit mindestens einem Dienst verbunden ist, für den der Zugriffsanbieter nun die Erlaubnis hat, ihn dem Inhaltsanbieter zur Verfügung zu stellen.

5. Verfahren nach einem der Ansprüche 1 bis 4, **dadurch gekennzeichnet, dass** eine Benutzerregistrierung eine Beschreibung eines Fehlverhaltens für die Brücke in einer spezifischen Linie einer Tabelle in dem Benutzerspeicher umfasst, wobei das Fehlverhalten von der Brücke übernommen wird, wenn es nicht möglich ist, den Benutzer mit einem Inhaltsanbieter zu verbinden.

6. Verfahren nach einem der Ansprüche 1 bis 5, **dadurch gekennzeichnet, dass** die Benutzerregistrierung in einer Benutzerdatenbasis aufgezeichnet ist, die von der Brücke abgefragt wird.

7. Verfahren nach Anspruch 6, **dadurch gekennzeichnet, dass** sich der Benutzer an die Benutzerdatenbasis anschließt, um die ihn betreffende Registrierung zu aktualisieren.

8. Verfahren nach einem der Ansprüche 1 bis 7, **dadurch gekennzeichnet, dass** die Benutzerregistrierung in einem Terminal des Benutzers aufgezeichnet ist, wobei die Brücke dieses Terminal abfragt, um die Benutzerregistrierung zu erhalten.

9. Verfahren nach einem der Ansprüche 1 bis 8, **dadurch gekennzeichnet, dass** ein Fehlverhalten der Brücke durch einen Riegel verriegelt wird, der ausdrücklich vom Benutzer geöffnet werden muss.
